Europäisches Patentamt

European Patent Office

Office européen des brevets

(19)

(11) Numéro de publication : **0 306 406 B1**

(12) **FASCICULE DE BREVET EUROPEEN**

(45) Date de publication du fascicule du brevet :
24.04.91 Bulletin 91/17

(51) Int. Cl.⁵ : **B01D 45/08,** B01D 45/14

(21) Numéro de dépôt : 88402195.7

(22) Date de dépôt : 31.08.88

(54) **Dispositif de filtrage d'air comportant des particules solides en suspension.**

(30) Priorité : 02.09.87 FR 8712206

(43) Date de publication de la demande :
08.03.89 Bulletin 89/10

(45) Mention de la délivrance du brevet :
24.04.91 Bulletin 91/17

(84) Etats contractants désignés :
AT BE CH DE ES GB GR IT LI LU NL SE

(56) Documents cités :
DE-B- 1 280 024
DE-C- 329 827
FR-A- 469 980
US-A- 2 740 491

(73) Titulaire : **Thomann, Odile Odette Marie**
**123bis, Boulevard Exelmans**
**F-75016 Paris (FR)**

(72) Inventeur : **Thomann, Odile Odette Marie**
**123bis, Boulevard Exelmans**
**F-75016 Paris (FR)**

(74) Mandataire : **Cabinet Pierre HERRBURGER**
**115, Boulevard Haussmann**
**F-75016 Paris (FR)**

EP 0 306 406 B1

Jouve, 18, rue Saint-Denis, 75001 PARIS

## Description

L'invention concerne un dispositif de filtrage d'air comportant des particules solides en suspension.

Les dispositifs de filtrage de ce type connus jusqu'à présent, se composent d'un panneau de matériau fibreux dont l'épaisseur et la densité sont déterminées en fonction de la quantité et des dimensions des particules solides à séparer d'un flux d'air. Cependant, l'inconvénient de ces dispositifs est qu'ils s'encrassent rapidement, si bien qu'on est alors obligé soit de les changer, soit de les nettoyer.

De tels dispositifs ne peuvent donc pas valablement être mis en oeuvre, dans le cas où l'air contient une grande quantité de particules solides en suspension et, notamment, dans le cas où le flux d'air véhicule des particules de sable ou similaire et est mis en oeuvre pour réaliser le ravalement des habitations et monuments par sablage.

On connaît également, par exemple par le brevet allemand N° 329 827, des dispositifs de filtrage qui se composent de profilés en forme de gouttières orientées, par leur ouverture, en direction du flux d'air à filtrer, ces profilés étant disposés en plusieurs plans parallèles placés l'un derrière l'autre. Cependant, de tels dispositifs n'assurent qu'un filtrage très imparfait, compte tenu que le flux d'air chargé de particules solides est, pour une grande part, dévié par les profilés sans que les particules solides viennent les frapper.

La présente invention a notamment pour but de remédier à ces inconvénients et concerne à cet effet un dispositif de filtrage de ce type, caractérisé en ce que les profilés sont montés à rotation radialement autour d'un axe, de façon à combiner la force axiale du courant d'air chargé de particules solides, à la force radiale créée par les profilés en rotation. En outre, dans cette disposition et du fait de la rotation des profilés, le courant d'air chargé de poussière vient obligatoirement frapper les profilés, de façon à assurer le filtrage des poussières qui sont alors projetées radialement vers la périphérie.

L'invention est représentée à titre d'exemple non limitatif sur les dessins ci-joints dans lesquels :

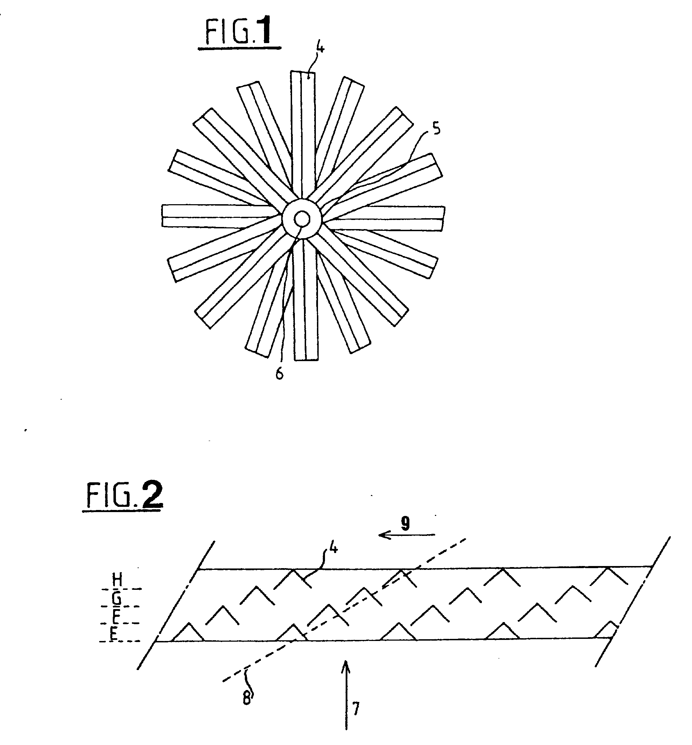

– la figure 1 est une vue axiale d'un dispositif conforme à l'invention,

– la figure 2 est une vue développée du dispositif de filtrage de la figure 1.

La présente invention a en conséquence pour but la réalisation d'un dispositif de construction simple et qui assure un filtrage ou tout au moins un préfiltrage d'un flux d'air chargé de particules solides sans que ce dispositif risque de s'encrasser.

Ce dispositif se compose de profilés rectilignes 4 en forme de gouttières, qui sont disposés radialement sur un moyeu 5 monté à libre rotation sur un axe 6. Ils sont disposés suivant plusieurs plans parallèle E, F, G, H placés l'un derrière l'autre, les divers profilés d'un plan étant décalés des profilés des plans adjacents.

Dans l'exemple de réalisation représenté, ces profilés rectilignes sont réalisés en forme de V et sont orientés dans le même sens, de façon que l'ouverture des gouttières en V soit dirigée en direction du flux d'air chargé de particules solides qu'il convient de filtrer. L'air venant frapper les gouttières d'un premier plan de gouttières, est dévié par ces dernières vers les gouttières du plan adjacent arrière, tandis que les particules solides qui viennent frapper la paroi de la gouttière, perdent leur force d'inertie et se rassemblent dans le fond de la gouttière. Ces gouttières qui reçoivent l'impact des particules solides, servent donc ensuite de moyen de canalisation de ces particules solides captées.

De préférence, ces gouttières seront orientées perpendiculairement au flux d'air à filtrer et verticalement mais toute autre disposition pourra être adoptée en fonction de la granulométrie moyenne des particules solides en suspension, de leur quantité, de la vitesse du flux d'air.

En considérant le sens du flux d'air à filtrer indiqué par la flèche 7, les profilés de chaque plan et par exemple du plan F, sont décalés chacun vers la droite d'un profilé d'un plan amont E de façon à former une structure constituant une pale 8 d'une hélice, afin que le flux d'air orienté suivant la flèche F produise la rotation des profilés 4 et de leur moyeu 6 dans le sens de la flèche 9.

Le flux d'air à filtrer agit donc comme moyen moteur pour faire tourner le rotor constitué par les pales 4 et leur moyeu 5, cette rotation étant telle qu'elle coopère à l'évacuation des particules solides séparées, vers la périphérie du rotor, sous l'action de la force centrifuge combinée avec la force de gravité.

Le recouvrement des profilés 4 composant chaque pale 8 ainsi que le recouvrement des pales l'une par rapport à l'autre, seront déterminés suivant les caractéristiques du flux d'air chargé à filtrer et suivant le résultat de filtrage à obtenir. Bien entendu, dans tous les cas, la nature du matériau constituant les profilés 4 sera déterminée de façon à résister à l'impact des particules solides véhiculées par l'air en mouvement.

## Revendications

1. Dispositif de filtrage d'air comportant des particules solides en suspension, se composant de profilés en forme de gouttières, orientés par leur ouverture en direction du flux d'air à filtrer, ces profilés étant disposés en plusieurs plans parallèles placés l'un derrière l'autre (E, F, G, H), les profilés des divers plans étant décalés des profilés des plans voisins, dispositif caractérisé en ce que les profilés (4) sont montés à rotation radialement autour d'un axe.

2. Dispositif conforme à la revendication 1, caractérisé en ce que les profilés d'un plan sont décalés par rapport aux profilés des plans adjacents, afin que chaque profilé d'un plan forme une pale d'une hélice avec un profilé de chacun des autres plans, cette hélice étant montée à libre rotation sur son axe.

## Ansprüche

1. Einrichtung zur Filterung von Luft, die suspendierte feste Teilchen enthält, bestehend aus Profilkörpern in Form von Rinnen, die mit ihrer Öffnung in Strömungsrichtung der zu filternden Luft ausgerichtet sind, wobei die Profilkörper in mehreren parallelen, hintereinander angeordneten Ebenen (E, F, G, H) angeordnet sind und die Profilkörper der verschiedenen Ebenen gegenüber den Profilkörpern der benachbarten Ebenen versetzt sind, dadurch gekennzeichnet, daß die Profilkörper (4) für eine Drehung radial um eine Achse angebracht sind.

2. Einrichtung nach Anspruch 1, dadurch gekennzeichnet, daß die Profilkörper einer Ebene in bezug auf die Profilkörper der benachbarten Ebenen derart versetzt sind, daß jeder Profilkörper einer Ebene ein Schaufelblatt eines Schraubenrades mit einem Profilkörper jeder der anderen Ebenen bildet, wobei das Schraubenrad frei drehbar auf seiner Achse angebracht ist.

## Claims

1. A device for the filtration of air containing suspended solid particles, comprising trough sections orientated by their opening in the direction of the air flow which is to be filtered, said sections being arranged in a plurality of parallel planes located one behind another (E, F, G, H), the sections of the different planes being offset with respect to the sections of the adjacent planes, which device is characterised in that, the sections (4) arm mounted so as to rotate radially about an axis.

2. A device as claimed in Claim 1, characterised in that the sections of one plane are offset with respect to the section of the adjacent planes, so that each section of a plane forms one blade of a helix with a section of each of the other planes, said helix being mounted so as to rotate freely on its axis.

## FIG.1

## FIG.2